# EUROPEAN PATENT APPLICATION

(11) **EP 4 403 440 A1**
(43) Date of publication of application: **24.07.2024**
(21) Application number: 23766164.0
(22) Date of filing: 13.03.2023
(51) Int. Cl.: B62D 33/04, B62D 33/023, B61D 17/08

(54) **LIGHTWEIGHT VARIABLE CROSS-SECTION VEHICLE COMPARTMENT AND VEHICLE**

(30) Priority: 11.03.2022 CN 202210242897; 11.03.2022 CN 202220538775 U
(71) Applicant: Zhejiang Geely Holding Group Co., Ltd., Hangzhou, Zhejiang 310051 (CN)
(72) Inventor: LI, Shufu, Hangzhou, Zhejiang 310051 (CN)
(74) Representative: Zaboliene, Reda
(86) International application number: PCT/CN2023/081186
(87) International publication number: WO 2023/169587

(57) **Abstract**

A lightweight variable cross-section vehicle compartment. The vehicle compartment at least comprises a bottom plate and two side plates, the two side plates being arranged on the left side and the right side of the bottom plate respectively, the two side plates being of variable cross-section structures, and the thickness of the bottoms of the side plates being greater than the thickness of the tops of the side plates. In the lightweight variable cross-section vehicle compartment, the material thickness is designed according to the idea of "constant strength", and while meeting the requirement for a load bearing strength, the vehicle compartment uses a variable cross-section design so as to maximize weight reduction, thus realizing the weight reduction lightweight structural design of a cargo vehicle, effectively reducing the oil consumption of the vehicle and increasing the cargo capacity.

## Description

### TECHNICAL FIELD

The present invention relates to the technical field of vehicle technology, in particular to a lightweight variable cross-section vehicle compartment and a vehicle having the vehicle compartment.

### BACKGROUND OF THE INVENTION

It has been proven through experiments that if the weight of a vehicle is reduced by 10%, fuel efficiency can be improved by about 6% to 8%, while also reducing exhaust emissions. On the other hand, from the perspective of customer value, domestic logistics transportation implements charging based on weight, and the efforts to control overloading are constantly increasing. Lightweight trucks can not only save costs for users, but also allow users to transport as much goods as possible without overloading.

At present, the weight of cargo vehicles is too large, and the weight of vehicle compartment accounts for a high proportion of the total weight of the vehicle, which does not meet the current demand for lightweight trucks. Therefore, it is necessary to design lightweight compartment to reduce the curb weight of the trucks, thereby reducing fuel consumption and increasing cargo capacity.

### SUMMARY OF THE INVENTION

The object of the present invention is to provide a lightweight variable cross-section vehicle compartment and a vehicle, to solve the problem of the vehicle compartment being too heavy for existing cargo vehicles, which affects the fuel consumption and cargo capacity of the vehicle during driving.

The technical solution adopted by the present invention is as follows:

The present invention provides a lightweight variable cross-section vehicle compartment. The vehicle compartment at least includes a bottom plate and two side plates. The two side plates are respectively located on the left and right sides of the bottom plate. The two side plates are of a variable cross-section structure, with the thickness of the bottom of the side plate being greater than the thickness of the top of the side plate.

In one embodiment, the thickness of the side plate gradually decreases from the bottom towards the top of the side plate.

In one embodiment, the bottom plate is of a variable cross-section structure, with the thickness of the middle of the bottom plate being greater than the thickness of the left and right sides of the bottom plate.

In one embodiment, the thickness of the bottom plate gradually decreases from the middle towards the left and right sides of the bottom plate.

In one embodiment, multiple crossbeams are provided on the lower surface of the bottom plate, and the thickness of the crossbeam gradually decreases from the middle towards the left and right ends of the crossbeam.

In one embodiment, multiple longitudinal beams are provided on the lower surface of the bottom plate, and each longitudinal beam is provided with multiple weight reduction holes along its length direction.

In one embodiment, the vehicle compartment further includes a top plate, and the thickness of the left and right sides of the top plate is greater than the thickness of the middle of the top plate.

In one embodiment, the thickness of the top plate gradually decreases from the left and right sides towards the middle of the top plate.

In one embodiment, the vehicle compartment further includes a front plate, and the thickness of the bottom of the front plate is greater than the thickness of the top of the front plate.

In one embodiment, the thickness of the front plate gradually decreases from the bottom towards the top of the front plate.

In one embodiment, the vehicle compartment further includes a rear plate, and the thickness of the bottom of the rear plate is greater than the thickness of the top of the rear plate.

In one embodiment, the thickness of the rear plate gradually decreases from the bottom towards the top of the rear plate.

In one embodiment, the two side plates are a left side plate and a right side plate, respectively, the vehicle compartment further includes a top plate, and the top plate is formed by splicing a left top plate and a right top plate, the left top plate is rotatably connected to the top of the left side plate, and the right top plate is rotatably connected to the top of the right side plate, the left top plate and the right top plate are each rotatable and changeable between a horizontal state and a vertical state;

when both the left top plate and the right top plate are rotated to the horizontal state, the left top plate and the right top plate are spliced together to form the top plate;

when the left top plate is rotated to the vertical state, the left top plate overlaps with an upper part of the left side plate;

when the right top plate is rotated to the vertical state, the right top plate overlaps with an upper part of the right side plate.

In one embodiment, the thickness of a lower part of the side plate is uniform, the thickness of an upper part of the side plate gradually decreases from bottom to top, the thickness of the left top plate gradually decreases from left to right, and the thickness of the right top plate gradually decreases from right to left.

In one embodiment, the thickness of a lower part of the side plate is uniform and has a first thickness, the thickness of an upper part of the side plate is uniform and has a second thickness, the thickness of the left top plate and the right top plate is uniform and has a third thickness, both the second thickness and the third thickness are less than the first thickness, and the sum of the second thickness and the third thickness is equal to the first thickness.

In one embodiment, when the left top plate is rotated to the vertical state and overlaps with the upper part of the left side plate, the left top plate and the left side plate are combined to form a complete rectangular side plate structure; when the right top plate is rotated to the vertical state and overlaps with the upper part of the right side plate, the right top plate and the right side plate are combined to form a complete rectangular side plate structure.

In one embodiment, the vehicle compartment further includes a top plate, and the top plate is made of waterproof canvas or thin sheet.

In one embodiment, when the top plate is made of waterproof canvas, the vehicle compartment further includes two fixing plates, the two fixing plates are respectively installed on the top of the outer surfaces of the two side plates, each fixing plate is provided with fixing members, and the left and right sides of the top plate are respectively fixed to the fixing members on the two fixing plates.

In one embodiment, when the top plate is a thin sheet, the vehicle compartment further includes detachable reinforcement members, the reinforcement members have a first installation state and a second installation state; in the first installation state, the reinforcement members are installed on the inner surface of an upper part of the side plate to reinforce the strength of the side plate; in the second installation state, the reinforcement members are installed on the inner surface of the top plate to reinforce the strength of the top plate.

The present invention also provides a vehicle including a lightweight variable cross-section vehicle compartment as described above.

The lightweight variable cross-section vehicle compartment provided in the embodiments of the present invention is designed according to the "equal strength" concept, with material thickness designed according to demand. Under the condition of meeting the bearing strength requirements, the vehicle compartment is designed with variable cross-section to maximize weight reduction and achieve the structural design of weight reduction and lightweight for cargo vehicles, thus effectively reducing fuel consumption and increasing cargo capacity.

### BRIEF DESCRIPTION OF THE DRAWINGS

FIG. 1 is a schematic diagram of the three-dimensional structure of a lightweight variable cross-section vehicle compartment in the first embodiment of the present invention.
FIG. 2 is a schematic diagram of the transverse cross-section of the lightweight variable cross-section vehicle compartment along the A-A line in FIG. 1.
FIG. 3 is a schematic diagram of the longitudinal cross-section of the lightweight variable cross-section vehicle compartment along the B-B line in FIG. 1.
FIG. 4 is a schematic diagram of a side plate of the lightweight variable cross-section vehicle compartment in FIG. 1.
FIG. 5 is a schematic diagram of the three-dimensional structure of the lightweight variable cross-section vehicle compartment in FIG. 1 from the bottom side.
FIG. 6 is a schematic diagram of a crossbeam in FIG. 5.
FIG. 7 is a schematic diagram of a longitudinal beam in FIG. 5.
FIG. 8 is a schematic diagram of the first state of a lightweight variable cross-section vehicle compartment in the second embodiment of the present invention.
FIG. 9 is a schematic diagram of the second state of the lightweight variable cross-section vehicle compartment in the second embodiment of the present invention.
FIG. 10 is a schematic diagram of the first state of a lightweight variable cross-section vehicle compartment in the third embodiment of the present invention.
FIG. 11 is a schematic diagram of the second state of the lightweight variable cross-section vehicle compartment in the third embodiment of the present invention.
FIG. 12 is a schematic diagram of the three-dimensional structure of a lightweight variable cross-section vehicle compartment in the fourth embodiment of the present invention.
FIG. 13 is a schematic diagram of the transverse cross-section of the lightweight variable cross-section vehicle compartment along the C-C line in the fourth embodiment of the present invention.
FIG. 14 is a schematic diagram of the first state of a lightweight variable cross-section vehicle compartment in the fifth embodiment of the present invention.
FIG. 15 is a schematic diagram of the second state of the lightweight variable cross-section vehicle compartment in the fifth embodiment of the present invention.

### DETAILED DESCRIPTION OF PREFERRED EMBODIMENTS

To further elaborate on the technical solutions and effects adopted by the present invention to achieve the intended purpose, the following is a detailed explanation of the present invention in conjunction with the accompanying drawings and preferred embodiments.

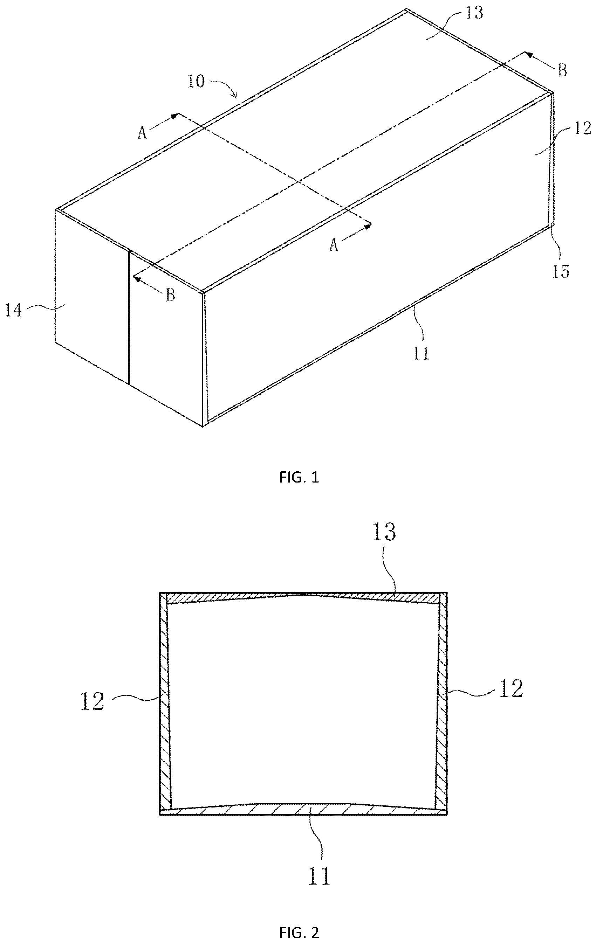

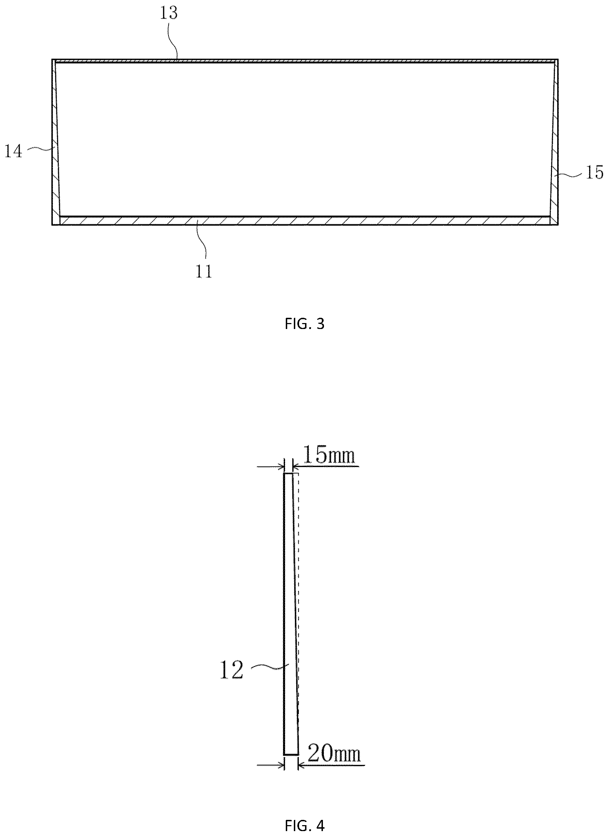

Please refer to FIGS. 1 to 3, an embodiment of the present invention provides a lightweight variable cross-section vehicle compartment 10. The vehicle compartment 10 at least includes a bottom plate 11 and two side plates 12. The two side plates 12 are respectively located on the left and right sides of the bottom plate 11. The two side plates 12 are of a variable cross-section structure, with the thickness of the bottom of the side plate 12 being greater than the thickness of the top of the side plate 12.

Specifically, in this embodiment, the thickness of the side plate 12 gradually decreases from the bottom towards the top of the side plate 12.

On the basis of the two side plates 12 being of a variable cross-section structure, further, the bottom plate 11 is also of a variable cross-section structure, with the thickness of the middle of the bottom plate 11 being greater than the thickness of the left and right sides of the bottom plate 11.

Specifically, in this embodiment, the thickness of the bottom plate 11 gradually decreases from the middle towards the left and right sides of the bottom plate 11.

The vehicle compartment 10 further includes a top plate 13. On the basis of the two side plates 12 being of a variable cross-section structure, further, the top plate 13 is also of a variable cross-section structure, with the thickness of the left and right sides of the top plate 13 being greater than the thickness of the middle of the top plate 13.

Specifically, in this embodiment, the thickness of the top plate 13 gradually decreases from the left and right sides towards the middle of the top plate 13.

The vehicle compartment 10 further includes a front plate 14. On the basis of the two side plates 12 being of a variable cross-section structure, further, the front plate 14 is also of a variable cross-section structure, with the thickness of the bottom of the front plate 14 being greater than the thickness of the top of the front plate 14.

Specifically, in this embodiment, the thickness of the front plate 14 gradually decreases from the bottom towards the top of the front plate 14.

The vehicle compartment 10 further includes a rear plate 15. On the basis of the two side plates 12 being of a variable cross-section structure, further, the rear plate 15 is also of a variable cross-section structure, with the thickness of the bottom of the rear plate 15 being greater than the thickness of the top of the rear plate 15.

Specifically, in this embodiment, the thickness of the rear plate 15 gradually decreases from the bottom towards the top of the rear plate 15.

It can be understood that the bottom plate 11 mentioned above can be a single plate, or it can be formed by assembling multiple sub-plates through welding and other methods.

Similarly, any of the side plates 12, top plate 13, front plate 14 and rear plate 15 mentioned above can be a single plate or formed by assembling multiple sub-plates through welding or other methods.

For example, the front plate 14 can be formed by splicing two sub-plates. The two sub-plates of the front plate 14 are hinged to the two side plates 12, so that each sub-plate of the front plate 14 can independently rotate and open to facilitate personnel and goods entering into and exiting from the interior of the vehicle compartment 10.

The lightweight variable cross-section vehicle compartment provided in this embodiment is designed according to the "equal strength" concept, with material thickness designed as needed. Under the condition of meeting the bearing strength requirements, the vehicle compartment is designed with variable cross-section to maximize weight reduction and achieve the structural design of weight reduction and lightweight for cargo vehicles, effectively reducing fuel consumption and increasing cargo capacity.

For a vehicle compartment 10 made of composite materials, if the thickness of the bottom of each of the side plates 12, front plate 14 and rear plate 15 of the vehicle compartment 10 remains unchanged at 20mm, and the thickness of the top of each of the side plates 12, front plate 14 and rear plate 15 is reduced to 15mm, then:
the density of the side plate 12, front plate 14 and rear plate 15 is 220kg/m³;
the cross-sectional area being reduced is 5275mm²;
the length of the two side plates 12, front plate 14 and rear plate 15 is 9342mm;
therefore, the side plate 12, front plate 14 and rear plate 15 can achieve weight reduction of 10.8kg.

Furthermore, if the thickness of both sides of the top plate 13 of the vehicle compartment 10 remains unchanged at 20mm, and the thickness of the middle of the top plate 13 is reduced to 10mm, then:
the density of the top plate 13 is 220kg/m³;
the cross-sectional area being reduced is 13967mm²;
the length of the top plate 13 is 4168mm;
therefore, the top plate 13 can achieve weight reduction of 12.8kg.

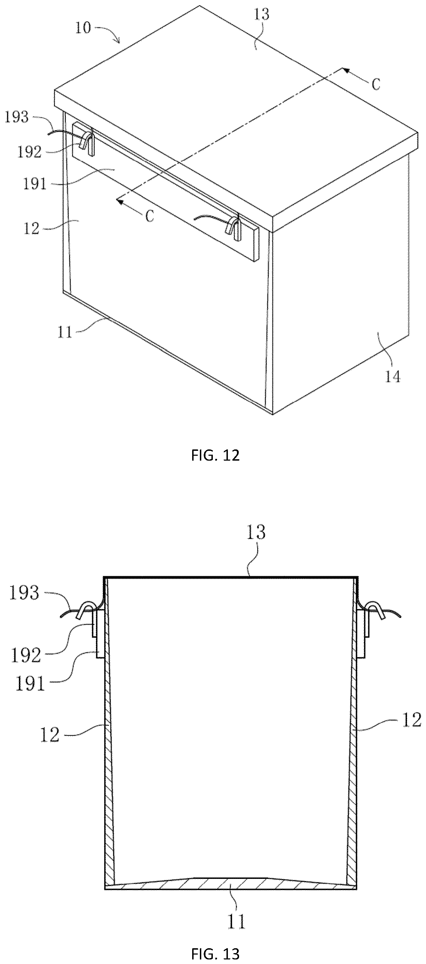

In addition, if the top plate 13 is changed to waterproof canvas (as shown in FIGS. 12 and 13 below), then:
the density of the top plate 13 is 220kg/m³;
the weight of the top plate 13 is 37.8kg;
the weight of the canvas plus related accessories is 10kg;
therefore, the top plate 13 can achieve weight reduction of 27.8kg.

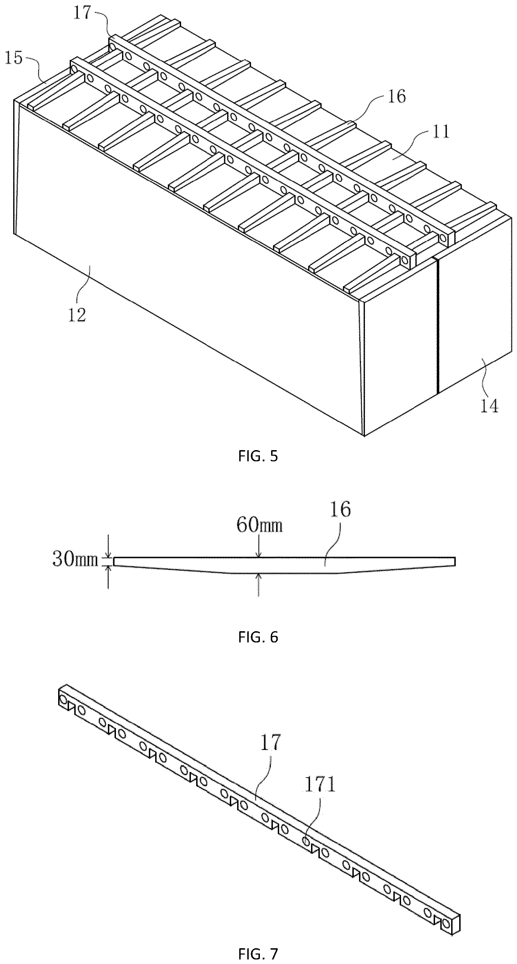

Further, please refer to FIGS. 5 and 6, multiple crossbeams 16, for example, ten crossbeams, are provided on the lower surface of the bottom plate 11. Each crossbeam 16 is designed as a trapezoidal shape, meaning that the thickness of the crossbeam 16 gradually decreases from the middle towards the left and right ends of the crossbeam 16.

If the crossbeam 16 is made of aluminum, the thickness in the middle of the crossbeam 16 remains unchanged at 60mm, and the thickness at both ends of the crossbeam 16 is reduced to 30mm, then:
the density of the aluminum crossbeam 16 is 2700kg/m³;
the weight reduction of each crossbeam 16 is 2kg;
therefore, the ten crossbeams 16 can achieve weight reduction of 20kg.

Further, please refer to FIGS. 5 and 7, multiple longitudinal beams 17, for example, two longitudinal beams, are provided on the lower surface of the bottom plate 11. Each longitudinal beam 17 is provided with multiple weight reduction holes 171 along its length direction.

If the longitudinal beam 17 is made of aluminum, and each longitudinal beam 17 is provided with seventeen circular holes with diameter of 60mm, then:
the density of the aluminum longitudinal beam 17 is 2700kg/m³;
the weight reduction of each weight reduction hole 171 is 0.03kg;
therefore, the two longitudinal beams 17 can achieve weight reduction of 0.03*17*2=1.02kg.

The crossbeams 16 and longitudinal beams 17 mentioned above are used to support the bottom plate 11, and are used to fix the entire vehicle compartment 10 onto the frame of a cargo vehicle (not shown).

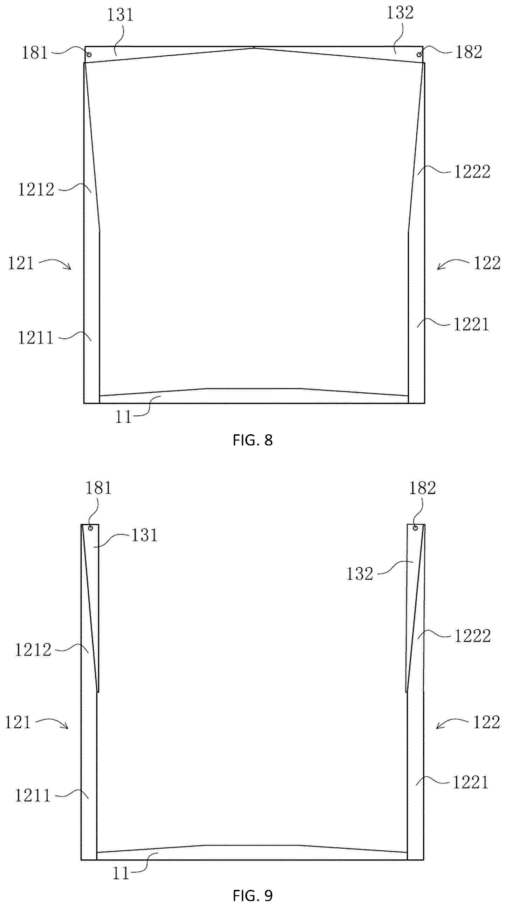

Please refer to FIGS. 8 to 11, in other embodiments of the present invention, the two side plates 12 are a left side plate 121 and a right side plate 122, respectively. The left side plate 121 has a lower part 1211 and an upper part 1212. The right side plate 122 has a lower part 1221 and an upper part 1222. The top plate 13 is formed by splicing a left top plate 131 and a right top plate 132. The left top plate 131 is rotatably connected to the top of the left side plate 121 through a first rotating shaft 181. The right top plate 132 is rotatably connected to the top of the right side plate 122 through a second rotating shaft 182. The left top plate 131 and the right top plate 132 are each rotatable and changeable between a horizontal state and a vertical state.

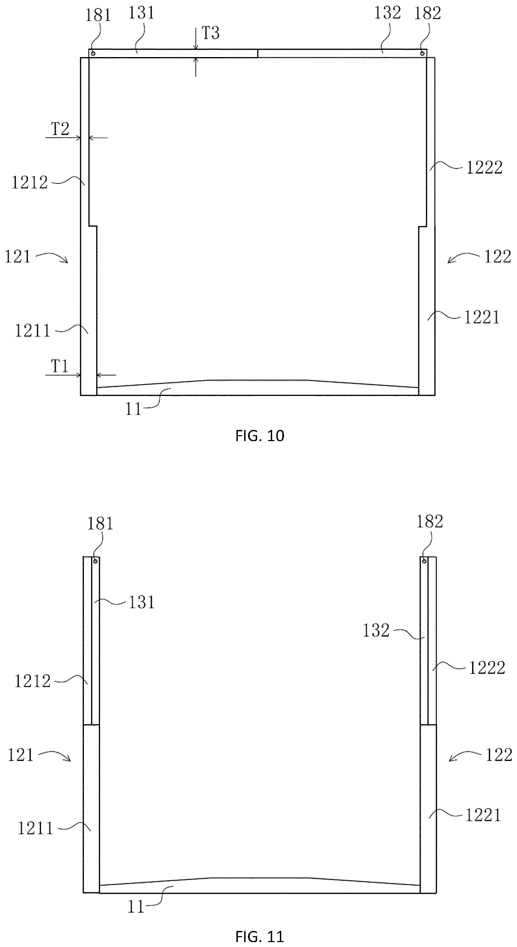

As shown in FIGS. 8 and 10, when both the left top plate 131 and the right top plate 132 are rotated to the horizontal state, the left top plate 131 and the right top plate 132 are spliced together to form the top plate 13.

As shown in FIGS. 9 and 11, when the left top plate 131 is rotated to the vertical state, the left top plate 131 overlaps with the upper part 1212 of the left side plate 121. When the right top plate 132 is rotated to the vertical state, the right top plate 132 overlaps with the upper part 1222 of the right top plate 122.

Specifically, please refer to FIGS. 9 and 11, when the left top plate 131 is rotated to the vertical state and overlaps with the upper part 1212 of the left side plate 121, the left top plate 131 and the left side plate 121 are combined to form a complete rectangular side plate structure. When the right top plate 132 is rotated to the vertical state and overlaps with the upper part 1222 of the right side plate 122, the right top plate 132 and the right side plate 122 are combined to form a complete rectangular side plate structure.

In the embodiments shown in FIGS. 8 and 9, the thickness of the lower part 1211 of the left side plate 121 and the lower part 1221 of the right side plate 122 is uniform. The thickness of the upper part 1212 of the left side plate 121 and the upper part 1222 of the right side plate 122 gradually decreases from bottom to top. The thickness of the left top plate 131 gradually decreases from left to right, and the thickness of the right top plate 132 gradually decreases from right to left.

In the embodiments shown in FIGS. 10 and 11, the thickness of the lower part 1211 of the left side plate 121 and the lower part 1221 of the right side plate 122 is uniform and has a first thickness T1. The thickness of the upper part 1212 of the left side plate 121 and the upper part 1222 of the right side plate 122 is uniform and has a second thickness T2. The thickness of the left top plate 131 and the right top plate 132 is uniform and has a third thickness T3. Both the second thickness T2 and the third thickness T3 are less than the first thickness T1, and the sum of the second thickness T2 and the third thickness T3 is equal to the first thickness T1.

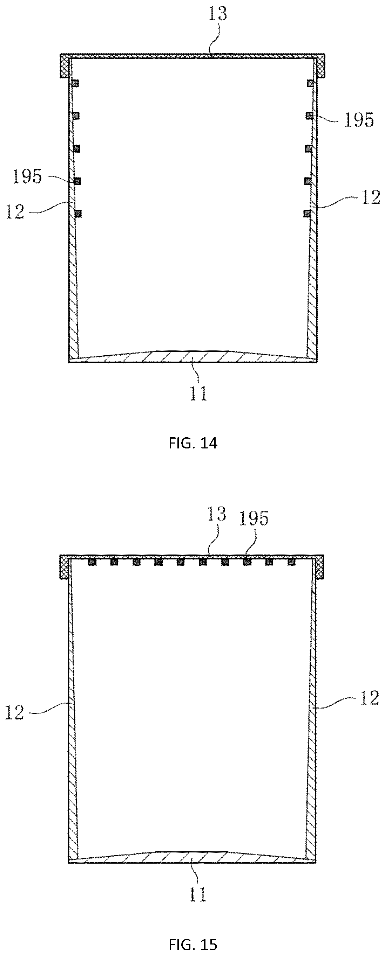

Please refer to FIGS. 12 to 15, in other embodiments of the present invention, the top plate 13 is made of waterproof canvas or thin sheet, wherein the thin sheet can be made of plastic or composite material. Specifically, in FIGS. 12 and 13, the top plate 13 is shown as waterproof canvas, and in FIGS. 14 and 15, the top plate 13 is shown as thin sheet. By using waterproof canvas or thin sheet as the top plate 13, the weight of the top plate 13 can be significantly reduced.

Please refer to FIGS. 12 and 13, when the top plate 13 is made of waterproof canvas, the vehicle compartment 10 further includes two fixing plates 191 (only one fixing plate is visible in FIG. 12). The two fixing plates 191 are respectively installed on the top of the outer surfaces of the two side plates 12. Each fixing plate 191 is in the shape of, for example, a long strip and is installed on the corresponding side plate 12 along the longitudinal direction of the vehicle compartment 10. Each fixing plate 191 is provided with fixing members 192. The left and right sides of the waterproof canvas acting as the top plate 13 are respectively fixed to the fixing members 192 on the two fixing plates 191. Specifically, the fixing member 192 is, for example, a hook. The number of the hooks 192 can be multiple, which are distributed and set on the fixing plate 191. By fixing the left and right sides of the waterproof canvas 13 to the hooks 192 of the two fixing plates 191 through fastening ropes 193, the tension and fixation of the waterproof canvas 13 can be achieved, thereby avoiding the shaking or detachment of the waterproof canvas 13 during driving.

Please refer to FIGS. 14 and 15, when the top plate 13 is a thin sheet, the vehicle compartment 10 further includes detachable reinforcement members 195. The reinforcement members 195 have a first installation state and a second installation state. In the first installation state, the reinforcement members 195 are installed on the inner surface of the upper part of the side plate 12 to reinforce the strength of the side plate 12. In the second installation state, the reinforcement members 195 are installed on the inner surface of the top plate 13 to reinforce the strength of the top plate 13. In this embodiment, the reinforcing members 195 are detachable, so that when the top plate 13 is not used (for example, on sunny days, the top plate 13 may not be needed), the reinforcing members 195 can be selected to be installed on the inner surface of the upper part of the side plate 12 for reinforcing the side plate 12, as shown in FIG. 14; when the top plate 13 is used (for example, on rainy days, the top plate 13 needs to be used for rain protection), as the top plate 13 is a thin sheet with weak strength, the reinforcing members 195 can be detached from the inner surface of the upper part of the side plate 12 and installed on the inner surface of the top plate 13 to reinforce the top plate 13, as shown in FIG. 15.

The lightweight variable cross-section vehicle compartment 10 in the above embodiments of the present invention is designed according to the "equal strength" concept, with material thickness designed according to demand. Under the condition of meeting the bearing strength requirements, the vehicle compartment is designed with variable cross-section to maximize weight reduction and achieve the structural design of weight reduction and lightweight for cargo vehicles, thus effectively reducing fuel consumption and increasing cargo capacity.

Further, the present invention also provides a vehicle including the lightweight variable cross-section vehicle compartment 10 as described in any of the above embodiments.

The above are only preferred embodiments of the present invention and do not limit the present invention in any form. Although the present invention has been disclosed in preferred embodiments, it is not intended to limit the present invention. Any person skilled in the art can make some changes or modifications to obtain equivalent embodiments within the scope of the technical solution of the present invention using the disclosed technical content. Any simple modifications, equivalent changes, and modifications made to the above embodiments based on the technical essence of the present invention without departing from the technical solution of the present invention shall still fall within the scope of the technical solution of the present invention.

## Claims

1. A lightweight variable cross-section vehicle compartment, wherein the vehicle compartment at least comprises a bottom plate and two side plates, the two side plates are respectively located on the left and right sides of the bottom plate, wherein the two side plates are of a variable cross-section structure, with the thickness of the bottom of the side plate being greater than the thickness of the top of the side plate.

2. The lightweight variable cross-section vehicle compartment as claimed in claim **1**, wherein the thickness of the side plate gradually decreases from the bottom towards the top of the side plate.

3. The lightweight variable cross-section vehicle compartment as claimed in claim **1**, wherein the bottom plate is of a variable cross-section structure, with the thickness of the middle of the bottom plate being greater than the thickness of the left and right sides of the bottom plate.

4. The lightweight variable cross-section vehicle compartment as claimed in claim **3**, wherein the thickness of the bottom plate gradually decreases from the middle towards the left and right sides of the bottom plate.

5. The lightweight variable cross-section vehicle compartment as claimed in claim **3**, wherein multiple crossbeams are provided on the lower surface of the bottom plate, and the thickness of the crossbeam gradually decreases from the middle towards the left and right ends of the crossbeam.

6. The lightweight variable cross-section vehicle compartment as claimed in claim **5**, wherein multiple longitudinal beams are provided on the lower surface of the bottom plate, and each longitudinal beam is provided with multiple weight reduction holes along its length direction.

7. The lightweight variable cross-section vehicle compartment as claimed in claim **1**, wherein the vehicle compartment further comprises a top plate, and the thickness of the left and right sides of the top plate is greater than the thickness of the middle of the top plate.

8. The lightweight variable cross-section vehicle compartment as claimed in claim **7**, wherein the thickness of the top plate gradually decreases from the left and right sides towards the middle of the top plate.

9. The lightweight variable cross-section vehicle compartment as claimed in claim **1**, wherein the vehicle compartment further comprises a front plate, and the thickness of the bottom of the front plate is greater than the thickness of the top of the front plate.

10. The lightweight variable cross-section vehicle compartment as claimed in claim **9**, wherein the thickness of the front plate gradually decreases from the bottom towards the top of the front plate.

11. The lightweight variable cross-section vehicle compartment as claimed in claim **1**, wherein the vehicle compartment further comprises a rear plate, and the thickness of the bottom of the rear plate is greater than the thickness of the top of the rear plate.

12. The lightweight variable cross-section vehicle compartment as claimed in claim **11**, wherein the thickness of the rear plate gradually decreases from the bottom towards the top of the rear plate.

13. The lightweight variable cross-section vehicle compartment as claimed in claim **1**, wherein the two side plates are a left side plate and a right side plate, respectively, the vehicle compartment further comprises a top plate, and the top plate is formed by splicing a left top plate and a right top plate, the left top plate is rotatably connected to the top of the left side plate, and the right top plate is rotatably connected to the top of the right side plate, the left top plate and the right top plate are each rotatable and changeable between a horizontal state and a vertical state;
when both the left top plate and the right top plate are rotated to the horizontal state, the left top plate and the right top plate are spliced together to form the top plate;
when the left top plate is rotated to the vertical state, the left top plate overlaps with an upper part of the left side plate;
when the right top plate is rotated to the vertical state, the right top plate overlaps with an upper part of the right side plate.

14. The lightweight variable cross-section vehicle compartment as claimed in claim **13**, wherein the thickness of a lower part of the side plate is uniform, the thickness of an upper part of the side plate gradually decreases from bottom to top, the thickness of the left top plate gradually decreases from left to right, and the thickness of the right top plate gradually decreases from right to left.

15. The lightweight variable cross-section vehicle compartment as claimed in claim **13**, wherein the thickness of a lower part of the side plate is uniform and has a first thickness, the thickness of an upper part of the side plate is uniform and has a second thickness, the thickness of the left top plate and the right top plate is uniform and has a third thickness, both the second thickness and the third thickness are less than the first thickness, and the sum of the second thickness and the third thickness is equal to the first thickness.

16. The lightweight variable cross-section vehicle compartment as claimed in claim **13**, wherein when the left top plate is rotated to the vertical state and overlaps with the upper part of the left side plate, the left top plate and the left side plate are combined to form a complete rectangular side plate structure; when the right top plate is rotated to the vertical state and overlaps with the upper part of the right side plate, the right top plate and the right side plate are combined to form a complete rectangular side plate structure.

17. The lightweight variable cross-section vehicle compartment as claimed in claim **1**, wherein the vehicle compartment further comprises a top plate, and the top plate is made of waterproof canvas or thin sheet.

18. The lightweight variable cross-section vehicle compartment as claimed in claim **17**, wherein when the top plate is made of waterproof canvas, the vehicle compartment further comprises two fixing plates, the two fixing plates are respectively installed on the top of the outer surfaces of the two side plates, each fixing plate is provided with fixing members, and the left and right sides of the top plate are respectively fixed to the fixing members on the two fixing plates.

19. The lightweight variable cross-section vehicle compartment as claimed in claim **17**, wherein when the top plate is a thin sheet, the vehicle compartment further comprises detachable reinforcement members, the reinforcement members have a first installation state and a second installation state; in the first installation state, the reinforcement members are installed on the inner surface of an upper part of the side plate to reinforce the strength of the side plate; in the second installation state, the reinforcement members are installed on the inner surface of the top plate to reinforce the strength of the top plate.

20. A vehicle comprising the lightweight variable cross-section vehicle compartment as claimed in any one of claims **1** to **19.**
